# EUROPEAN PATENT SPECIFICATION

(11) **EP 2 585 307 B1**
(45) Date of publication and mention of the grant of the patent: **06.08.2014**
(21) Application number: 11737912.3
(22) Date of filing: 28.06.2011
(51) Int. Cl.: B41N 10/04, B32B 25/10, B32B 5/26, B32B 5/02, B32B 25/18

(54) **POLYMER BASED DOUBLE COMPRESSIBLE LAYER CARCASS FOR PRINTING BLANKET**
AUF POLYMER BASIERENDE KARKASSE MIT KOMPRIMIERBARER DOPPELSCHICHT FÜR EIN DRUCKTUCH
CARCASSE À DOUBLE COUCHE COMPRESSIBLE À BASE DE POLYMÈRE POUR BLANCHET D'IMPRESSION

(30) Priority: 28.06.2010 IT MI20101174
(43) Date of publication of application: 01.05.2013
(73) Proprietor: Trelleborg Engineered Systems Italy S.P.A., 20131 Milano (IT)
(72) Inventor: DAMEWOOD, John, Spartanburg, SC (US); BRANTLEY, Larry, Moore, SC 29369 (US); CARLETTI, Stefano, I-20098 S. Giuliano Milanese (IT); SANTORELLI, Rosanna, I-20159 Milano (IT)
(74) Representative: Rapisardi, Mariacristina
(86) International application number: PCT/EP2011/060796
(87) International publication number: WO 2012/000982

(56) References cited:
- JP-A- 2000 001 061
- US-A1- 2007 062 394

## Description

### Field of the invention

The invention relates to a carcass comprising a double polymeric compressible layer for printing blankets, such as an offset lithography blanket.

### Background of the invention

The use of blankets in printing techniques, such as, offset lithography, is well known, wherein such blankets have a primary function of transferring ink from a printing plate to paper. Such printing blankets are very carefully designed so that the blanket is not damaged, either by mechanical contact with the press or by chemical reaction with the ink ingredients or other solvents used in the printing process. Repeated mechanical contacts do cause a certain amount of compression of the blanket, however, integrity of the blanket must be maintained within acceptable limits so that the image is properly reproduced. It is also important that the blanket has rebound characteristics such that it is capable of eventually returning to its original thickness, and that it provide image transfer of a constant quality.

To obtain the desired properties, printing blankets are generally produced by stacking and adhering several layers of different materials, each one conferring different characteristics to the final blanket. Multilayer polymeric printing blankets can be broadly described as having two subcomponent layers: the printing face, and the carcass.

The printing face layer is the portion of the blanket that transfers ink from plate to paper, etc. This layer is generally made up of elastomeric materials. Beneath this face layer, a subface elastomeric layer may be present, made of a material with higher durometer and tensile strength and lower elongation compared to the elastomeric material of the printing face layer; this subface layer is provided to reinforce the printing layer.

The carcass is the total construction lying beneath the face (and in case the subface) layer. In order to create a carcass that can withstand the stresses of the printing process, a number of polymeric coatings and textile layers are generally employed. The firm joining of the subsequent layers of the carcass (and of this to the face layer) may be assured by the use of dedicated layers of suitable adhesive, in particular for joining fabric layers to polymeric layers; or, the materials the layers are made of may have themselves sufficient adhesion to the materials of the next layers; in this case, fabric layers may adhere to the next ones through the impregnation of the fabric with the overlying polymeric material.

Multilayer printing blankets of different structures, or processes for their production, are disclosed in a number of patents, such as, for instance, U.S. Pat. Nos. 3,983,287, 4,174,244, 4,303,721, 5,352,507, 5,389,171, 5,487,339, 5,549,968, 5,974,974, 6,027,789, 6,071,620 and 6,645,601 B1.

The carcass preferably comprises at least one compressible layer, made of a polymeric material containing voids evenly distributed throughout the layer, obtained e.g. through the use of foaming or blowing agents added to the polymer during the formation of the layer, as well known in the field; alternatively, hollow microspheres (generally of average diameter around about 100 µm) may be distributed uniformly in the layer, fulfilling the same function as the above voids. The presence of a compressible layer helps reducing or eliminating printing problems, such as "blurring" (i.e., a lack of definition), caused by a small standing wave in the blanket printing surface adjacent to the nip of the printing press. Such compressible layer also can serve to absorb a "smash", that is, a substantial deformation in the blanket caused by a temporary increase in the thickness in the material to be printed due to, for example, the accidental introduction of more than one sheet of paper during the printing operation. By incorporating a compressible layer in the blanket, a "smash" can be absorbed without permanent damage to the blanket or impairment of the printing quality of the blanket. In addition, a resilient, compressible layer helps to maintain the evenness of the printing surface and the thickness of the blanket during the printing operation by restoring the normal thickness of the blanket after compression at the nip of the press. The carcass may also comprise more than one compressible layers, of same or different compression properties, separated for instance by a fabric layer or a continuous (i.e., not containing voids or microspheres) polymeric layer; printing blankets comprising at least two compressible layers are disclosed for example in International patent application WO 2008/113621 A1, European Pat. Nos. EP 0448469 B1 and EP 0613791 B1, and in U.S. Pat. Nos. 6,205,922 B1 and 7,562,624 B2.

Prior art blankets have been commonly produced by processes requiring, e.g., 15 or 20 coating passes through a polymeric laminating machine, plus 3 or 4 layers of fabric. These blankets of the type described above suffer from a variety of deficiencies, however, which negatively affect their durability and print quality. For example, they are susceptible to wicking of ink, water and solvents commonly used in a press room, through either the exposed cut edges of the blankets or, in instances where these edges are protected by the application of a sealant, directly through cracks in the blanket or the bottom ply of the fabric. Waters, solvents, and inks that wick through to the under layers of the blanket can react with or cause deterioration to the adhesives bonding the various layers of the blanket together. At best, this can result in a bubbling of the printing blanket, leading to decreased print quality and lower printing speeds due to an imbalance created in the blanket. At worst, the wicking can cause delamination of the blanket, which can result in substantial damage to the printing apparatuses and large downtimes. Moreover, the production of these blankets, occurring through several cycles of deposition of a fluid precursor of the layer containing a solvent for the polymer and extraction of the solvent, were undesirable from the environmental standpoint.

Japanese Pat. No. JP 3,935,270 and International patent application WO 2007/035593 A2 teach improved single-compressible-layer blankets, and processes for their manufacture, that avoid the need for a number of coating passes for forming the polymer layers of a blanket, as well as the use of solvents in the production of many of these. According to these documents, the polymer layers of a blanket, and in particular the compressible layer, are realized with thermoset polymers. The use of thermosets allows to depose any layer in a blanket in a single passage, thanks to the fact that the starting material is not a low-viscosity solution of monomers or oligomers of the final polymer dissolved in a solvent; the relatively high viscosity of the prepolymers of the final thermosets makes it possible to depose a layer of full thickness in a single passage. Another advantage linked to the absence of solvents, contributing to the possibility of producing layers in a single passage, is the avoidance of the problem encountered with too thick layers of solvent-soaked precursors (monomers or oligomers), that dry only slowly and with difficulty, and possibly with different rates in different points of the layer, thus giving rise to unevenness in the properties of the same. The blankets disclosed in JP 3,935,270 and WO 2007/035593 A2, though a noteworthy improvement compared to previous ones, still suffer from some drawbacks. The present inventors have observed that a blanket produced according to the teachings of the said two documents present too high load values, namely, they have poor compressibility, unsuitable for application for instance in offset printing.

### Summary of the invention

It is an object of the present invention to provide an improved printing blanket, not suffering from the above cited problems; another object of the invention is to provide a process for the production of said blanket.

These and other objects are achieved by the present invention that, in a first aspect thereof, is about a carcass for a printing blanket comprising, in order:
- a fabric stack substrate comprising at least one fabric ply, each of said plies having a plurality of warp and fill fibers or yarns;
- a first compressible layer deposed atop said substrate comprising a moisture cured thermoset polymer matrix having a plurality of closed cells distributed substantially uniformly therein such that said first compressible layer has substantially uniform compression characteristics;
- a separation layer;
- a second compressible layer deposed atop said separation layer, comprising a moisture cured thermoset polymer matrix having a plurality of closed cells distributed substantially uniformly therein such that said second compressible layer has substantially uniform compression characteristics; and
- a top fabric stack deposed atop said second compressible layer comprising at least one fabric ply, each of said plies having plurality of warp and fill fibers or yarns.

In a preferred embodiment, the carcass of the invention is joined to a face layer made of an elastomeric polymer deposed atop said top fabric stack, to yield a complete printing blanket.

Other layers or components may be present in the carcass of printing blanket of the invention, further to the ones cited above. For instance, at the interface between one or more pairs of adjoining layers and/or fabric plies may be present an adhesive compound or, between the top fabric stack and the face layer, a subface (generally elastomeric) layer may be present, as previously discussed. It is also possible that the blanket comprises more than two separated compressible layers; in the preferred embodiment, however, the carcass has only two compressible layers, kept apart by a separation layer being a single-ply fabric.

### Brief description of the drawings

FIGURE 1 is a greatly enlarged cross-sectional view of a possible embodiment of a carcass for multilayer printing blankets according to the invention;
FIGURE 2 is a greatly enlarged cross-sectional view of a possible embodiment of a multilayer printing blanket comprising the carcass of the invention.

### Detailed description

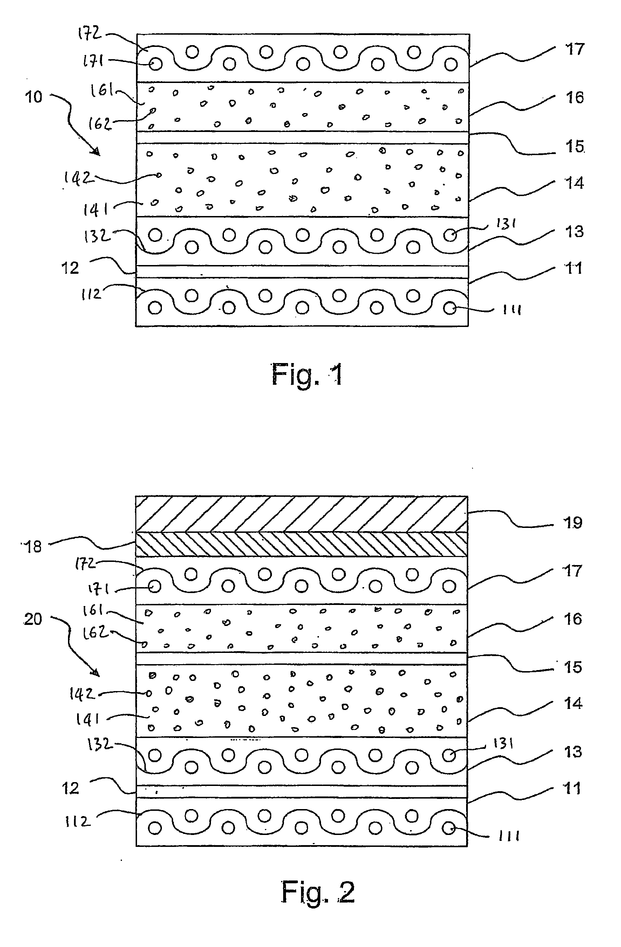

Figure 1 shows a first embodiment of carcass 10 of the invention for printing blankets. This carcass is comprised of, in sequence, a first fabric layer forming substrate 11, an adhesive layer 12, a second fabric layer 13, a first compressible layer 14, a separation layer 15, a second compressible layer 16, and a third fabric layer 17.

In general, in the fabric plies used in the present invention, the fiber or yarn counts per inch for both warp or fill directions can vary between about 8 and 60 counts/cm (20-150 counts/inch), depending upon the denier of the fiber or yarn. Moreover, fabric weights of 65 to 270 g/m², preferably about 135 to 270 g/m² (2 to 8, preferably 4 to 8 ounces per square yard) and thicknesses of 0.125 to 0.75 mm (0.005 to 0.03") can be utilized for particular applications of the various fabric plies of this invention.

The fabric substrate 11 is comprised of at least one fabric ply, having warp fibers 111 and fill fibers 112, which are formed of natural or synthetic material. These fibers are woven and produced from spun or filament yarn of the desired length. Cotton, polyester, nylon, rayon, etc. are typical materials which may be used as fibers or yarns of the fabric substrate 11.

Preferably, the warp fibers 111 are formed from natural material such as cotton, whereas the fill fibers 112 are comprised of a synthetic textile (e.g., polyester). Both the warp and fill fibers or yarns should have a tensile strength of at least 0.2 MPa (30 psi). The substrate preferably has a yarn count per inch ranging between about 21 and 24 counts/cm (55-61 counts/inch) for warp fibers, and between about 22 and 25 counts/cm (57-63 counts/inch) for fill fibers. The fabric substrate ranges between about 200 to 210 g/m² (5.8 to 6.2 ounces/sq. yd.) in weight and from about 0.35 to 0.40 mm (0.014 to 0.016 inches) in thickness (also referred to as "gauge"). The warp direction has a tensile strength of at least about 26.8 Kg/cm (150 pounds/inch), whereas that of the fill direction is at least about 10.7 Kg/cm (60 pounds/inch). Moreover, in the preferred embodiment, the fabric substrate should be capable of no more than about 1.9% residual stretch.

Fabric substrate 11 may be spread coated, calendared, dipped, or otherwise contacted upon only its upper surface with an adhesive material 12. Suitable adhesive materials include thermoplastic resins and thermosetting resins, as well as natural or synthetic elastomers. As to their chemical nature, useful compounds can be chosen among polyurethanes; the adhesives of the acrylonitrile, neoprene, and acrylic families; polysulfides, alone or in combination with acrylonitrile or neoprene; and PVC and other modified polyolefins. Preferably, the adhesive can be a thermoset resin, most preferably a thermoset polyurethane or polyurea. The preferred viscosity for the matrix material ranges between about 10,000 to 25,000 cps at 100 °C. The adhesive material used with the fabric plies may additionally contain a plurality of cells therein. These cells, either closed or open, are similar to those formed or present within the compressible layer, as described in detail below.

Located directly above the adhesive 12, and bonded thereto, is fabric 13 comprising at least one fabric ply. Fabric plies of fabric 13 are similar in many respects to fabric substrate 11 discussed above in that the plies of fabric 13 are comprised of warp fibers 131, and fill fibers 132, respectively, formed of natural or synthetic material. These fibers, as in the case of substrate 11, are woven and are comprised of spun or filament yarn of the desired length. Preferably, the warp fibers are formed from natural material such as cotton; whereas the fill fibers are comprised of a synthetic textile (e.g., polyester). Both the warp and fill fibers or yarns should have a tensile strength of at least about 0.2 MPa (30 psi).

In a preferred embodiment, plies of fabric 13 have a yarn count per centimeter ranging between about 29 and 32 (75-80 counts/inch) for warp and between about 20 and 23 (53-58 counts/inch) for fill. Fabric 13 ranges in weight between about 165 to 180 g/m² (4.9 to 5.3 ounces/sq. yd). The thickness, i.e., gauge, of fabric 13 ranges between about 0.27 and 0.29 mm (about 0.0105 to 0.0115 inch). The warp fibers 131 have a tensile strength of at least about 26.8 Kg/cm (150 pounds/inch). The tensile strength of fill fibers 132 is at least about 7.15 Kg/cm (40 pounds per inch). Fabric 13 should be capable of no more than about 2.2% residual stretch. Located above the fabric 13 is a first compressible layer 14. This layer is made from a suitable resilient thermoset polymer matrix 141, into which a quantity of cell-forming materials, or microspheres 142, are evenly dispersed to form a compound. Layer 14 may have a thickness comprised between about 0.3 mm and 0.5 mm, and preferably between 0.38 mm and 0.46 mm (0.015 to 0.018 inches). A thermoset is crosslinked to such an extent that it "sets" into a given shape when first made, and cannot be shaped or molded later when heated to their Tg. Rather, the thermoset will decompose upon heating past its Tg. Thermosets are typically hard, strong, and brittle, but they may soften slightly when heated to below their Tg. Because of this extensive crosslinking, the thermoset is very resistant to interactions with other chemicals, as well as high temperatures and abrasions. Thermosets are therefore often utilized as a coating or adhesive in order to prevent corrosion of the underlying materials.

Thermoset materials can be used in other layers, further the compressible ones, and possibly even in all of the layers, depending on the desired properties, or as an adhesive between fabric layers. The thermoset material can comprise a single large compressible layer with microspheres therein.

The polymer matrix 141 can be a material similar to that used in adhesive layer 12, including acrylonitrile, neoprene, and acrylic families. Polysulfides, alone or in combination with acrylonitrile or neoprene, can also be used. Preferably, the polymer matrix is a thermoset resin, most preferably a thermoset polyurethane or polyurea, due to the ease and convenience of their crosslinking upon exposure to moisture.

Moisture-cure polyurethanes are formed with resins having terminal isocyanate NCO groups in the molecule. They are normally a single-package polyurethane prepolymer. Following application, the prepolymer or the isocyanate group reacts with moisture in the atmosphere to form the final cross-linked coating.

These are generally low molecular weight, linear polymers, with isocyanate end groups. Such isocyanate-terminated prepolymers can be produced by reacting an excess of polyisocyanate with high molecular weight hydroxyl polyester or polyether polyols.

The isocyanate end-groups react with any compound containing an active hydrogen, such as alcohols, amines, or other polyurethanes and ureas. For moisture curing systems, the active hydrogen is provided by atmospheric moisture. Thus, the relative humidity will effect the speed at which the system cures.

The reaction is a two stage process where water first reacts with the isocyanate groups to produce an amine and carbon dioxide. The amine will then react with other isocyanate groups to form a urea until all available isocyanates are consumed. Carbon dioxide that is generated diffuses through the film and is then evaporated from the system. The reactions can be summarized as follows:

-NCO + H₂O → -NH₂ + CO₂

-NCO + -NH₂ → -NH-CO-NH

-NCO + -NH-CO-NH → -NH-CO-NH-CO-N

The preferred viscosity for the matrix material ranges between about 10,000 to 25,000 cps.

As said above, into matrix 141 a cell-forming material or microspheres 142 are evenly dispersed; the use of microspheres is preferred, because these allow a better control of uniformity of the voids in the layer.

Generally, the microspheres are formed from materials such as, i.e., thermoplastic resins, thermosetting resins, and phenolic resins. The microspheres range in diameter between about 1-200 and preferably 80-100 micron (µm), with an average size of about 90 µm being most preferred. They are dispersed relatively uniformly throughout the matrix material such that, upon application of the matrix to the fabric ply, they become thoroughly embedded in its interstices. Thus, when applied, the microsphere loaded material described herein will substantially impregnate the fabric substrate on its upper side.

The microspheres are uniformly distributed throughout the elastomer in such a way to avoid any appreciable crushing of the microspheres. Additionally, the microspheres are incorporated in the elastomeric material at a loading of about 1-20% by weight and preferably 5-14% of the solid contents. This percentage will vary based on such factors as microsphere dimension, wall thickness, extent of any crosslinking and bulk density, or if blowing agents are additionally incorporated within the matrix.

To form the cells in the embodiment described above, any of a wide variety of microspheres 142 can be added to a solution or dispersion of the matrix 141. If solvent solutions are utilized, the selected microspheres must be resistant to chemical attack from the solvents.

Several acceptable types of thermoplastic microspheres for use with the present invention are marketed, for example, by Expancel and Dualite. Microspheres of a thermoplastic resin are preferred for this embodiment.

If desired, the microspheres may further include a coating thereon to prevent them from agglomerating. Any one of a variety of coatings thereupon, such as talc, calcium carbonate, zinc oxide, titanium dioxide, mica, calcium sulfate, barium sulfate, antimony oxide, clay, silica, and aluminum trihydrate may be used. Improper selection of the sphere/coating can interfere with the desirable properties of the matrix, which can adversely effect polymerization thereof.

Preferably, the urethane first compressible layer 14 of the present invention is a hot-melt, moisture-cured system similar to that of adhesive 12, and does not utilize a solvent carrier. It can therefore be applied without the repetitive layer passes of some prior art processes. First compressible layer 14 can be applied as a single layer, which can be applied in excess of 0.1 mm (0.04 inches) in a single pass. First compressible layer 14 may be adhered to fabric 13 with, for example, the use of a layer of a suitable adhesive (not shown). The particular adhesive will depend upon the specific elastomers utilized to form the plies. Preferably, first compressible layer 14 is bonded directly to fabric 13, without the use of additional adhesives.

Located above first compressible layer 14 is separation layer 15. The material of this layer must be breathable, and thus is normally a fabric. The reason is that the reactions producing thermosetting polymers (for instance, those reported above for the production of polyurtehanes) produce gases that need to find a way out the thermoset; otherwise, these would remain entrapped in the forming polymeric material, creating bubbles and bulges in the same, that are unacceptable in the present invention. The fabric of layer 15 may be made of either natural or synthetic fibers, or of a mix of the two.

The way the separation layer 15 is adhered to the first compressible layer 14 depends on the material chosen for the separation layer. In case the latter is made of fabric, a layer of a suitable adhesive (not shown) may be interposed between the two, though the adhesion may be obtained through direct bonding without the use of adhesives. In case the separation layer is made of a compatible polymer, and in particular when it is made of the same material as matrix 141, no adhesive is required.

Above the separation layer 15 is present a second compressible layer 16. This layer is generally made of the same materials and microspheres as first compressible layer 14, and is comprised of a suitable resilient thermoset polymer matrix 161, into which a quantity of cell-forming materials, or microspheres 162, are evenly dispersed to form a compound. The two compressible layers may however be different as to thickness, the kind of microspheres or cell forming material, and the loading with microspheres or cell forming material. Preferably, the thickness of second compressible later 16 is lower than the thickness of first compressible layer 14. The preferred values of thickness of layer 16 are comprised between about 0.15 mm and 0.45 mm (0.006 to 0.018 inches). Adhesion between second compressible layer 16 and separation layer 15 follows the same general principles as in case of layers 14 and 15.

Atop second compressible layer 16, a top fabric 17 is present, comprising at least one fabric ply. Fabric 17 can be bonded to second compressible layer 16 with the use of a suitable adhesive such as those described above. Preferably, fabric 17 is nipped directly into the second compressible layer 16, alleviating the need for an adhesive.

Fabric plies of the top fabric 17 are similar in many respects to fabric substrate 11 discussed above in that the plies of fabric 17 are comprised of warp fibers 171 and fill fibers 172, respectively, formed of natural or synthetic material. These fibers, as in the case of substrate 11, are woven and comprised of spun or filament yarn of the desired length. Both the warp and fill fibers or yarns should have a tensile strength of at least about 30 psi.

As stated above, in a preferred embodiment of the present invention, an elastomeric printing face is bonded to the carcass, through fabric 17.

This embodiment is represented in Figure 2, showing a complete blanket, 20, formed by the carcass of Figure 1 on top of which a subface elastomeric layer 18 and an elastomeric face layer 19 are bonded.

In this configuration, an intermediate elastomeric subface is preferably present between fabric 17 and the printing face. Elastomeric subface 18, which is bonded to the upper portion of fabric 17, is formed from a high durometer, high tensile, low elongation compound (i.e., in comparison to the material used to form the printing face, as described below), which is preferably a compounded nitrile rubber. Alternately, however, a variety of water and solvent based elastomeric compounds, well known in the art, may be used instead of nitrile rubber in forming the subface. Subface 18 is provided to re-enforce the printing face, thus resulting in improved blanket life and resistance to cutting while in use.

Elastomeric printing face 19, adapted to accept the print image from the printing plate and transfer it to, e.g., a paper substrate, is the uppermost layer on laminated/coated blanket 10. In prior art blankets, the application of the elastomeric printing face is typically carried out by the well known method of knife over roll spreading in which a solvated elastomeric compound is spread in numerous successive passes, applying a thickness of about 0.001" with each pass, over, e.g., a subface or upper fabric layer. Alternative ways to produce elastomeric printing face 19 extrusion and calendering processes, as known to the skilled technicians in the field. Moreover, as pointed out above, in comparison to the material used to form the subface, the elastomeric material used to form the printing face is lower in durometer and tensile strength and higher in elongation.

In addition, printing blankets of the type described above are typically provided with a roughened surface profile in an effort to reduce dot gain, while maintaining good release properties for the blanket. Such roughness profiles have, in the past, been produced either by molding during cure, or by buffing the cured face with medium or coarse grit sandpaper, which is well known in the art. The surface profile is thereafter measured by, e.g., a device known as a profilometer (manufactured by the Perthen Corporation), which is also well known in the art. The surface profiles of prior art laminated blanket printing faces typically have a roughness average (i.e., "RA") of 1.0 to 1.8 µm while cast blankets, which do not have good release properties, typically have an RA of 0.3 to 0.5 µm. In this regard, it is important to note that the higher the roughness average, the worse the print quality becomes due to decreasing uniformity of the dots.

In blanket 10 of the present invention, however, the roughness average of printing face 19 is adjusted to above about 0.6 µm but below about 0.95 µm, and preferably between about 0.7 to 0.9 µm by buffing with fine sandpaper. The advantage of this treatment is that it affords excellent release properties to the blanket while also resulting in an improved structure of the printed dots, thus providing both improved print quality and releasability to the blanket of the invention. This effect may also be achieved by a number of alternate methods well known in the art, such as molding.

Of course, modifications to the carcass and complete printing blanket described above are possible. For instance, fabric layer 13 an adhesive layer 12 could be avoided in both the carcass and the printing blanket, leading to a simpler construction.

## Claims

1. A carcass (10) for a printing blanket comprising, in order:
- a fabric stack substrate (11) comprising at least one fabric ply, having warp fibers (111) and fill fibers (112) formed of natural or synthetic material, each of said plies having a plurality of warp and fill fibers or yarns;
- a first compressible layer (14) deposed atop said substrate comprising a moisture cured thermoset polymer matrix having a plurality of closed cells distributed substantially uniformly therein such that said first compressible layer has substantially uniform compression characteristics;
- a separation layer (15) made of either natural or synthetic fibers, or of a mix of the two;
- a second compressible layer (16) deposed atop said separation layer, comprising a moisture cured thermoset polymer matrix having a plurality of closed cells distributed substantially uniformly therein such that said second compressible layer has substantially uniform compression characteristics; and
- a top fabric stack (17) deposed atop said second compressible layer comprising at least one fabric ply, each of said plies having plurality of warp and fill fibers or yarns.

2. Carcass according to claim 1, further comprising, at the interface between one or more pairs of adjoining layers and/or fabric plies, an adhesive compound.

3. Carcass according to claim 1, wherein the separation layer is in its turn a multi-ply fabric layer.

4. Carcass according to claim 1, wherein the fabric plies have: a fiber or yarn count per inch for both warp or fill directions comprised between 20 and 150; fabric weights of 65 to 270 g/m², preferably about 135 to 270 g/m²; and a thickness of 0.125 to 0.75 mm.

5. Carcass according to claim 1, wherein in the fabric stack substrate (11) the warp fibers (111) are formed from natural material such as cotton, whereas the fill fibers (112) are comprised of a synthetic textile (e.g., polyester).

6. Carcass according to claim 1, wherein said first compressible layer has a thickness comprised between about 0.30 mm and 0.50 mm, preferably between 0.38 mm and 0.46 mm, and is made from a suitable resilient thermoset polymer matrix (141), into which a quantity of cell-forming materials, or microspheres (142), are evenly dispersed to form a compound.

7. Carcass according to claim 1, wherein said second compressible layer has a thickness lower than the thickness of first compressible layer 14, and preferably comprised between about 0.15 mm and 0.45 mm

8. Carcass according to claims 6 or 7, wherein said matrix of the first compressible layer is chosen among acrylonitrile, neoprene, acrylic families, polysulfides, alone or in combination with acrylonitrile or neoprene, polyurethane or polyurea.

9. Carcass according to claim 6 or 7, wherein said microspheres are formed from materials chosen among thermoplastic resins, thermosetting resins, and phenolic resins, and have a diameter ranging between about 1-200 and preferably 80-100 micron (µm), preferably about 90 µm.

10. Carcass according to claim 6 or 7, wherein said microspheres further include a coating thereon to prevent them from agglomerating, chosen among talc, calcium carbonate, zinc oxide, titanium dioxide, mica, calcium sulfate, barium sulfate, antimony oxide, clay, silica, and aluminum trihydrate.

11. Carcass according to claim 6 or 7, wherein the loading of microspheres in said compressible layer is of about 1-20% by weight and preferably 5-14% of the solid contents.

12. Carcass according to claim 1, wherein the separation is in its turn a multilayer, made up of multiple plies of fabric.

13. Printing blanket (20) comprising an elastomeric printing face (19) bonded to the top fabric stack of the carcass of claim 1.

14. Printing blanket according to claim 13, comprising an intermediate elastomeric subface (18) present between the top fabric stack and said printing face, formed from a material that has high durometer, high tensile, low elongation properties compared to the material of the printing face.

15. Printing blanket according to claim 13, wherein said subface is made of a nitrile rubber.

16. Printing blanket according to claim 13, wherein said elastomeric printing face has an average roughness comprisd between about 0.6 µm and about 0.95 µm, and preferably between about 0.7 to 0.9 µm.

17. Printing blanket according to claim 16, wherein said roughness is obtained by buffing the outer surface of the printing face with fine sandpaper or by molding.

## Patentansprüche

1. Karkasse (10) für ein Drucktuch, umfassend der Reihenfolge nach:
- ein Gewebestapelsubstrat (11), umfassend mindestens eine Gewebelage, aufweisend Kettfasern (111) und Schussfasern (112), gebildet aus einem natürlichen oder synthetischen Material, wobei jede Lage eine Vielzahl an Kett- und Schussfasern oder - garnen aufweist;
- eine erste verdichtbare Schicht (14), aufgelegt auf der Oberseite des Substrats, umfassend eine feuchtigkeitsgehärtete Polymermatrix, aufweisend eine Vielzahl an im Wesentlichen gleichmäßig verteilten geschlossenen Zellen, wobei die erste verdichtbare Schicht im Wesentlichen gleichmäßige Verdichtungseigenschaften aufweist;
- eine Trennschicht (15), bestehend entweder aus natürlichen oder synthetischen Fasern oder einer Mischung der beiden;
- eine zweite verdichtbare Schicht (16), aufgelegt auf der Oberseite der Trennschicht, umfassend eine feuchtigkeitsgehärtete Duroplast-Polymermatrix, aufweisend eine Vielzahl an im Wesentlichen gleichmäßig verteilten geschlossenen Zellen, wobei die zweite verdichtbare Schicht im Wesentlichen gleichmäßige Verdichtungseigenschaften aufweist;
- einen oberseitigen Gewebestapel (17), aufgelegt auf der Oberseite der zweiten verdichtbaren Schicht, umfassend mindestens eine Gewebelage, wobei jede Gewebelage eine Vielzahl an Kett- und Schussfasern oder -garnen aufweist.

2. Karkasse nach Anspruch 1, zudem umfassend an der Verbindungsstelle zwischen einem oder mehreren Paaren angrenzender Schichten und/oder Gewebelagen eine haftende Verbindung.

3. Karkasse nach Anspruch 1, wobei es sich bei der Trennschicht wiederum um eine mehrlagige Gewebeschicht handelt.

4. Karkasse nach Anspruch 1, wobei die Gewebelagen aufweisen: eine Faser- oder Garnzählung pro Zoll sowohl für die Kett- als auch die Schussrichtungen, eingeschlossen zwischen 20 und 150, Gewebegewichte von 65 bis 270 g/m2, vorzugsweise zirka 135 bis 270 g/m2, und eine Dicke von 0,125 bis 0,75 mm.

5. Karkasse nach Anspruch 1, wobei die Kettfasern (111) im Gewebestapelsubstrat (11) aus natürlichem Material wie Baumwolle gebildet sind, wogegen die Schussfasern (112) aus einer synthetischen Textilie (z. B. Polyester) umfasst sind.

6. Karkasse nach Anspruch 1, wobei die erste verdichtbare Schicht eine Dicke zwischen zirka 0,30 mm und 0,50 mm, vorzugsweise zwischen 0,38 mm und 0,46 mm aufweist und aus einer geeigneten nachgiebigen Duroplast-Polymermatrix (141) besteht, in der eine Menge zellenbildender Materialien oder Mikrosphären (142) gleichmäßig verteilt sind, sodass eine Verbindung gebildet wird.

7. Karkasse nach Anspruch 1, wobei die zweite verdichtbare Schicht eine Dicke aufweist, die geringer ist als die Dicke der ersten verdichtbaren Schicht 14, vorzugsweise eingeschlossen zwischen zirka 0,15 mm und 0,45 mm.

8. Karkasse nach Anspruch 6 oder 7, wobei die Matrix der ersten verdichtbaren Schicht ausgewählt wird aus Acrylnitril, Neopren, Acrylfamilien, Polysulfiden, allein oder in Kombination mit Acrylnitril oder Neopren, Polyurethan oder Polyharnstoff.

9. Karkasse nach Anspruch 6 oder 7, wobei die Mikrosphären aus Materialien gebildet sind, ausgewählt aus Thermoplastharzen, Duroplastharzen und Phenolharzen, und einen Durchmesser zwischen zirka 1 bis 200 und vorzugsweise 80 bis 100 Mikrometer (µm), vorzugsweise zirka 90 µm, aufweisen.

10. Karkasse nach Anspruch 6 oder 7, wobei die Mikrosphären zudem eine Beschichtung aufweisen, die verhindert, dass sie sich agglomerieren, ausgewählt aus Talk, Calciumcarbonat, Zinkoxid, Titandioxid, Glimmer, Calciumsulfat, Bariumsulfat, Antimonoxid, Lehm, Kieselerde und Aluminiumtrihydrat.

11. Karkasse nach Anspruch 6 oder 7, wobei die Ladung an Mikrosphären in der verdichtbaren Schicht zirka 1 bis 20 % Gewichtsanteil und vorzugsweise 5 bis 14 % des Feststoffgehalts beträgt.

12. Karkasse nach Anspruch 1, wobei die Trennschicht mehrlagig ist, bestehend aus mehreren Gewebelagen.

13. Drucktuch (20), umfassend eine Elastomerdruckseite (19), gebunden mit dem oberseitigen Gewebestapel der Karkasse aus Anspruch 1.

14. Drucktuch nach Anspruch 13, umfassend eine Elastomerzwischenunterseite (18) zwischen dem oberseitigen Gewebestapel und der Druckseite, geformt aus einem Material, das hohe Eigenschaften in Bezug auf Härtegrad, Zerreißfestigkeit und Bruchdehnung im Vergleich zum Material der Druckseite aufweist.

15. Drucktuch nach Anspruch 13, wobei diese Unterseite aus Nitrilkautschuk besteht.

16. Drucktuch nach Anspruch 13, wobei die Elastomerdruckseite eine durchschnittliche Rauigkeit eingeschlossen zwischen zirka 0,6 µm und zirka 0,95 µm aufweist, vorzugsweise zwischen zirka 0,7 und 0,9 µm.

17. Drucktuch nach Anspruch 16, wobei diese Rauigkeit durch Abschleifen der äußeren Oberfläche der Druckseite mit feinem Sandpapier oder durch Verschmelzung erhalten wird.

## Revendications

1. Carcasse (10) pour un blanchet d'impression comprenant, dans l'ordre :
- un substrat d'empilement de tissu (11) comprenant au moins un pli de tissu ayant des fibres de chaîne (111) et des fibres de remplissage (112) composées d'une matière naturelle ou synthétique, chacun desdits plis ayant une pluralité de fibres de chaînes et de remplissage ou de fils ;
- une première couche compressible (14) déposée au sommet dudit substrat comprenant une matrice polymère thermodurcie à l'humidité ayant une pluralité de cellules fermées réparties substantiellement uniformément de manière à ce que ladite première couche compressible possède des caractéristiques de compression substantiellement uniformes ;
- une couche de séparation (15) soit en fibres naturelles ou synthétiques ou composée d'un mélange des deux ;
- une seconde couche compressible (16) déposée au sommet de ladite couche de séparation comprenant une matrice polymère thermodurcie à l'humidité ayant une pluralité de cellules fermées réparties substantiellement uniformément de manière à ce que ladite seconde couche compressible possède des caractéristiques de compression substantiellement uniformes ; et
- un empilement de tissu supérieur (17) déposé au sommet de ladite seconde couche compressible comprenant au moins un pli de tissu, chacun desdits plis ayant une pluralité de fibres de chaîne et de remplissage ou de fils.

2. Carcasse selon la revendication 1, comprenant de plus au niveau de l'interface entre une ou plusieurs paires de couches contigües et/ou de plis de tissu, un composant adhésif.

3. Carcasse selon la revendication 1, dans laquelle la couche de séparation est à son tour une couche de tissu multipli.

4. Carcasse selon la revendication 1, dans laquelle les plis de tissu possèdent : un numéro de fibre ou de fil par pouce pour les deux directions de chaîne ou de remplissage compris entre 20 et 150 ; des poids du tricot de 65 à 270 g/m2, de préférence entre environ 135 et 270 g/m2 et une épaisseur de 0,125 à 0,75 mm.

5. Carcasse selon la revendication 1, dans laquelle dans le substrat d'empilement de tissu (11) les fibres de chaîne (111) sont formées à partir d'une matière naturelle telle que le coton, alors que les fibres de remplissage (112) sont composées d'un textile synthétique (ex. : polyester).

6. Carcasse selon la revendication 1, dans laquelle ladite première couche compressible possède une épaisseur comprise entre environ 0,30 mm et 0,50 mm, de préférence entre 0,38 mm et 0,46 mm et est fabriquée à partir d'une matrice polymère thermodurcie élastique adaptée (141) dans laquelle une quantité de matières formant des cellules, ou microsphères (142), sont également dispersées pour former un composant.

7. Carcasse selon la revendication 1, dans laquelle ladite seconde couche compressible possède une épaisseur inférieure à celle de la première couche compressible (14) et de préférence comprise entre environ 0,15 mm et 0,45 mm.

8. Carcasse selon les revendications 6 ou 7, dans laquelle ladite matrice de la première couche compressible est choisie parmi l'acrylonitrile, le néoprène, les familles d'acrylique, les polysulphides, seuls ou en combinaison avec l'acrylonitrile ou le néoprène, le polyuréthane ou le polyuréa.

9. Carcasse selon les revendications 6 ou 7, dans laquelle lesdites microsphères sont composées de matières choisies parmi des résines thermoplastiques, des résines thermodurcissables et des résines phénoliques et ont un diamètre compris entre environ 1 et 200 et de préférence 80 et 100 microns (µm), de préférence d'environ 90 µm.

10. Carcasse selon les revendications 6 ou 7, dans laquelle lesdites microsphères incluent de plus un enduit, les empêchant de s'agglomérer, choisi parmi le talc, le carbonate de calcium, l'oxyde de zinc, le dioxyde de titane, le mica, le sulfate de calcium, le sulfate de baryum, l'oxyde d'antimoine, l'argile, la silice et l'aluminium trihydraté.

11. Carcasse selon les revendications 6 ou 7, dans laquelle le chargement des microsphères dans ladite couche compressible correspond environ à 1 à 20 % en poids et de préférence de 5 à 14 % des contenus solides.

12. Carcasse selon la revendication 1, dans laquelle la séparation est à son tour une multicouche composée de plis multiples de tissu.

13. Blanchet d'impression (20) comprenant une face d'impression élastomère (19) liée à l'empilement de tissu supérieur de la carcasse de la revendication 1.

14. Blanchet d'impression selon la revendication 13, comprenant une surface élastomère intermédiaire (18), présente entre l'empilement de tissu supérieur et ladite face d'impression, formée à partir d'une matière ayant une dureté élevée, une résistance à la traction élevée et des propriétés d'étirement faibles comparativement à la matière de la face d'impression.

15. Blanchet d'impression selon la revendication 13, dans lequel ladite surface est en caoutchouc nitrile.

16. Blanchet d'impression selon la revendication 13, dans lequel ladite face d'impression élastomère possède une rugosité moyenne comprise entre environ 0,6 µm et environ 0,95 µm et de préférence entre environ 0,7 et 0,9 µm.

17. Blanchet d'impression selon la revendication 16, dans lequel ladite rugosité est obtenue par polissage de la surface externe de la face d'impression avec un papier abrasif mince ou par moulage.
